# EUROPÄISCHE PATENTANMELDUNG

(11) **EP 4 678 447 A1**
(43) Veröffentlichungstag der Anmeldung: **14.01.2026**
(21) Anmeldenummer: 25183061.8
(22) Anmeldetag: 16.06.2025
(51) Int. Cl.: B60K 17/22, B60K 17/346, B60K 17/356, B60K 17/02, B60K 17/04, B60K 17/30, F16H 37/08, F16H 48/22, F16H 61/00

(54) **ANTRIEBSVORRICHTUNG EINER ARBEITSMASCHINE, ANTRIEBSSTRANG UND ARBEITSMASCHINE**

(30) Priorität: 09.07.2024 DE 102024206430
(71) Anmelder: ZF Friedrichshafen AG, 88046 Friedrichshafen (DE)
(72) Erfinder: Willems, Samuel, 72459 Albstadt (DE); Himmelsbach, Raphael, 88045 Friedrichshafen (DE); Beck, Stefan, 88097 Eriskirch (DE); Reisch, Matthias, 88214 Ravensburg (DE); Igl, Stefan, 94474 Vilshofen (DE); Dankesreiter, Martin, 94034 Passau (DE); Haas, Michael, 94491 Hengersberg (DE); Morrison, Robert, 88069 Tettnang (DE)
(74) Vertreter: ZF Friedrichshafen AG

(57) **Zusammenfassung**

Die vorliegende Erfindung betrifft eine Antriebsvorrichtung für eine Arbeitsmaschine (10) mit einem als Elektromaschine (90) ausgebildeten Traktionsmotor (18) und einem Längsverteilergetriebe (20) mit einer ersten und zweiten Ausgangswelle (26, 28) zum Antreiben jeweils einer zugeordneten Achsanordnung (14, 16) der Arbeitsmaschine (10). Die Antriebsvorrichtung ist dazu ausgebildet, eine Antriebsleistung von dem Traktionsmotor (18) über das Längsverteilergetriebe (20) an die beiden Ausgangswellen (26, 28) zu übertragen. Die beiden Ausgangswellen (26, 28) sind koaxial zueinander und achsparallel zu dem Traktionsmotor (18) angeordnet. Zudem bezieht sich die Erfindung auf einen Antriebsstrang und eine Arbeitsmaschine.

## Beschreibung

### Technisches Gebiet

Die vorliegende Erfindung bezieht sich auf eine Antriebsvorrichtung für eine Arbeitsmaschine mit einem als Elektromaschine ausgebildeten Traktionsmotor. Zudem bezieht sich die Erfindung auf einen Antriebsstrang und auf eine Arbeitsmaschine.

### Stand der Technik

Bei Arbeitsmaschinen sind Antriebsvorrichtungen mit als Elektromaschine ausgebildeten Traktionsmotoren bekannt. Sofern von einem einzigen Traktionsmotor eine Vorderachse und eine Hinterachse angetrieben werden sollen, ist dabei eine technisch aufwendige Leistungsaufteilung mit großem Bauraumbedarf notwendig.

### Darstellung der Erfindung

Ein erster Aspekt betrifft eine Antriebsvorrichtung für eine Arbeitsmaschine mit einem als Elektromaschine ausgebildeten Traktionsmotor. Die Antriebsvorrichtung kann dazu ausgebildet sein, eine Fahrleistung für ein Fahren mit der Arbeitsmaschine bereitzustellen. Die Arbeitsmaschine kann beispielsweise als Landmaschine oder Baumaschine ausgebildet sein. Ein Beispiel für eine Landmaschine ist ein Traktor. Ein Beispiel für eine Baumaschine ist ein Radlader. Die Elektromaschine kann beispielsweise als Synchronmotor oder Asynchronmotor ausgebildet sein. Die Elektromaschine kann auch zur Rekuperation ausgebildet sein. Die Arbeitsmaschine kann einen Energiespeicher und ein Steuergerät zum Betreiben der Antriebsvorrichtung aufweisen. Der Traktionsmotor kann eine Motorwelle aufweisen, an welcher eine durch den Traktionsmotor erzeugte Antriebskraft bereitgestellt wird.

Die Antriebsvorrichtung weist ein Längsverteilergetriebe mit einer ersten Ausgangswelle zum Antreiben einer ersten Achsanordnung der Arbeitsmaschine und mit einer zweiten Ausgangswelle zum Antreiben einer zweiten Achsanordnung der Arbeitsmaschine auf. Die Antriebsvorrichtung ist dazu ausgebildet, eine Antriebsleistung von dem Traktionsmotor über das Längsverteilergetriebe an die beiden Ausgangswellen zu übertragen. Dafür können jeweilige mechanische Wirkverbindungen vorgesehen sein. Das Längsverteilergetriebe kann dazu ausgebildet sein, eine Antriebsleistung von dem Traktionsmotor auf die zwei Ausgangswellen aufzuteilen. Die Aufteilung kann fest vorgegeben oder auch variabel sein. Zusätzlich kann das Längsverteilergetriebe eine Übersetzung zwischen einer Eingangswelle des Längsverteilergetriebes und den Ausgangswellen bereitstellen. Das Längsverteilergetriebe kann beispielsweise als Reduziergetriebe ausgebildet sein. Die Eingangswelle des Längsverteilergetriebes kann beispielsweise mit dem Traktionsmotor mechanisch wirkverbunden sein. Das Längsverteilergetriebe kann für eine einstellbare Übersetzung ausgebildet sein. Beispielsweise kann das Längsverteilergetriebe dazu ausgebildet sein, zwei unterschiedliche Gänge bereitzustellen. Eine Übersetzung des Längsverteilergetriebes kann aber nicht einstellbar sein und fest vorgegeben sein.

Die erste Achsanordnung kann beispielsweise als Hinterachse der Arbeitsmaschine ausgebildet sein und die zweite Achsanordnung als Vorderachse der Arbeitsmaschine. Der Traktionsmotor und alternativ oder zusätzlich das Längsverteilergetriebe können zwischen der ersten Achsanordnung und der zweiten Achsanordnung angeordnet sein, beispielsweise in Vorwärts-Rückwärtsrichtung der Arbeitsmaschine. Der Traktionsmotor und alternativ oder zusätzlich das Längsverteilergetriebe können alternativ oder zusätzlich auch in einer durch die axiale Erstreckung der beiden Ausgangswellen definierte Achse zwischen der ersten Achsanordnung und der zweiten Achsanordnung angeordnet sein. Die Achsanordnungen können jeweilige Abtriebselemente, wie Fahrzeugräder oder eine Fahrzeugkette, antreiben und auch aufweisen. Beispielsweise kann eine Achsanordnung an entgegengesetzten Enden jeweils ein Fahrzeugrad aufweisen. Eine Achsanordnung kann ein Querdifferential mit einer Achseingangswelle aufweisen, welche mit der zugeordneten Ausgangswelle des Längsverteilergetriebes zur Übertragung von Antriebsleistung verbunden ist. Beispielsweise kann die Achseingangswelle mit der zugeordneten Ausgangswelle permanent drehfest verbunden sein oder auch mittels eines Schaltelements drehfest verbindbar sein. Die Achsanordnungen können ein Radgetriebe, beispielsweise in Planetenbauweise, aufweisen. Die Achsanordnungen können eine Bremse aufweisen, mittels welcher die Abtriebselemente abbremsbar und auch festsetzbar sein können.

Die beiden Ausgangswellen sind koaxial zueinander angeordnet. Die beiden Ausgangswellen können beispielsweise eine gemeinsame Drehachse aufweisen. Die beiden Ausgangswellen sind achsparallel zu dem Traktionsmotor angeordnet. Die Drehachse der beiden Ausgangswellen kann also parallel zu einer Drehachse des Traktionsmotors angeordnet sein. Die Drehachse des Traktionsmotors kann durch dessen Motorwelle definiert sein. Der Traktionsmotor kann achsparallel versetzt zu den beiden Ausgangswellen angeordnet sein. Dann kann die Motorwelle mit der Eingangswelle mechanisch wirkverbunden sein. Dafür kann beispielsweise eine Stirnradstufe oder ein anderes Kraftübertragungsmittel, wie ein Zugmittel, vorgesehen sein. Das Zugmittel kann beispielsweise als Kette ausgebildet sein. Alternativ kann der Traktionsmotor auch koaxial zu den beiden Ausgangswellen angeordnet sein. Dann kann die Motorwelle beispielsweise permanent drehfest mit der Eingangswelle verbunden sein.

Durch die beschriebene Anordnung der Ausgangswellen und des Traktionsmotors kann die Antriebsvorrichtung kompakt und mechanisch einfach sein. Beispielsweise kann ein Außendurchmesser von dem Traktionsmotor kleiner oder gleich zu einem Außendurchmesser von dem Längsverteilergetriebe sein. Dadurch kann eine Integration einfach sein. Das Längsverteilergetriebe und der Traktionsmotor können gemeinsam oder getrennt an der Arbeitsmaschine gelagert sein. Das Längsverteilergetriebe und der Traktionsmotor können ein gemeinsames Gehäuse oder separate Gehäuse aufweisen. Das Längsverteilergetriebe kann beispielsweise eine Planetenbauweise oder eine Stirnradbauweise haben. Das Längsverteilergetriebe kann sowohl Planetenradsätze als auch Stirnradsätze aufweisen. Die Antriebsvorrichtung kann als modularer Bausatz bereitgestellt werden. Dann können im Folgenden beschriebene Module und Funktionen modular ausgewählt werden. Die Antriebsvorrichtung und insgesamt die Arbeitsmaschine kann frei von weiteren Traktionsmotoren sein.

In einer Ausführungsform der Antriebsvorrichtung ist es vorgesehen, dass der Traktionsmotor koaxial mit dem Längsverteilergetriebe angeordnet ist. Dadurch kann die Antriebsvorrichtung in einer radialen Richtung besonders wenig Bauraum benötigen. Beispielsweise ist die Motorwelle des Traktionsmotors koaxial mit der ersten Ausgangswelle und der zweiten Ausgangswelle angeordnet. Bei einer modularen Bauweise kann auswählbar sein, ob der Traktionsmotor koaxial oder achsparallel versetzt angeordnet ist. Bei einer achsparallel versetzten Anordnung kann ein axialer Bauraumbedarf gering sein.

In einer Ausführungsform der Antriebsvorrichtung ist es vorgesehen, dass der Traktionsmotor eine als Hohlwelle ausgebildete Motorwelle aufweist. Bei einer Hohlwelle kann eine zentrale Durchgangsöffnung vorgesehen sein. Die zweite Ausgangswelle kann sich durch die Motorwelle hindurch erstrecken. Dadurch kann axial beidseitig zu dem Traktionsmotor eine Achsanordnung verbunden werden, ohne dass dafür beispielsweise zusätzliche Stirnradstufen vorgesehen werden müssen. Der Traktionsmotor kann so einfach zentral in Längsrichtung in der Arbeitsmaschine angeordnet werden. Alternativ kann die Motorwelle frei von Durchgangsöffnungen sein und als massive Welle ausgebildet sein.

In einer Ausführungsform der Antriebsvorrichtung ist es vorgesehen, dass die Antriebsvorrichtung ein Schaltelement zum mechanischen Wirkverbinden von einer der ersten und zweiten Ausgangswelle mit der zugeordneten Achsanordnung aufweist. Der ersten Ausgangswelle ist die erste Achsanordnung zugeordnet. Der zweiten Ausgangswelle ist die zweite Achsanordnung zugeordnet. Es können auch zwei Schaltelemente vorgesehen sein, wobei ein erstes dieser Schaltelemente zum mechanischen Wirkverbinden der ersten Ausgangswelle mit der ersten Achsanordnung und ein zweites dieser Schaltelemente zum mechanischen Wirkverbinden der zweiten Ausgangswelle mit der zweiten Achsanordnung ausgebildet ist. Dadurch kann zwischen einem Mehrachsenantrieb, wie einem Allradantrieb, und einem Antreiben nur einer Achse, umgeschaltet werden. Die jeweiligen Schaltelemente können beispielsweise als reibschlüssige Schaltelemente oder formschlüssige Schaltelemente ausgebildet sein. Ein Beispiel für ein reibschlüssiges Schaltelement ist eine Lamellenkupplung. Ein Beispiel für ein formschlüssiges Schaltelement ist eine Klauenkupplung. Alternativ kann die erste Ausgangswelle mit der ersten Achsanordnung mechanisch wirkverbunden sein und die zweite Ausgangswelle mit der zweiten Achsanordnung. Dann wird beispielsweise ein permanenter Antrieb beider Achsen bereitgestellt. Bei einer modularen Bauweise kann auswählbar sein, welche der Ausgangswellen mit deren zugeordneter Achsanordnung dauerhaft mechanisch wirkverbunden sind und welche der Ausgangswellen mit deren zugeordneter Achsanordnung schaltbar mechanisch wirkverbindbar sind. Die Ausgangswellen können mit der jeweils zugeordneten Achsanordnung beispielsweise jeweils über eine Kardanwelle verbunden sein.

In einer Ausführungsform der Antriebsvorrichtung ist es vorgesehen, dass wenigstens eine der beiden Achsanordnungen für ein Lenken der Arbeitsmaschine gelenkig mit der zugeordneten Ausgangswelle verbunden ist. So kann für die Arbeitsmaschine eine Knicklenkung bereitgestellt werden. Beispielsweise werden dann nicht jeweilige Räder zum Lenken um eine Hochachse gedreht, sondern stattdessen wird beispielsweise ein vorderer Teil eines Fahrzeugrahmens gegenüber einem hinteren Teil eines Fahrzeugrahmens zum Lenken um eine Hochachse verschwenkt. Es kann sowohl die erste Ausgangswelle mit der ersten Achsanordnung als auch die zweite Ausgangswelle mit der zweiten Achsanordnung jeweils gelenkig verbunden sein. Ein Lenken der Arbeitsmaschine kann ein Steuern nach links und rechts beim Fahren ermöglichen. Bei einer modularen Bauweise kann auswählbar sein, welche der Ausgangswellen mit deren zugeordneter Achsanordnung gelenkig verbunden sind und welche der Ausgangswellen mit deren zugeordneter Achsanordnung ungelenkig verbunden sind. Dies kann mit der zuvor geschilderten schaltbaren mechanischen Wirkverbindung kombiniert werden.

In einer Ausführungsform der Antriebsvorrichtung ist es vorgesehen, dass der Antriebsstrang ein Schaltgetriebe aufweist, welches für eine Übertragung der Antriebsleistung von dem Traktionsmotor an das Längsverteilergetriebe schaltbar mit einer ersten Übersetzung und wenigstens einer zweiten Übersetzung ausgebildet ist. Das Schaltgetriebe kann beispielsweise zwei oder mehr Gänge bereitstellen. Das Schaltgetriebe kann auch für ein Abkoppeln des Traktionsmotors von dem Längsverteilergetriebe ausgebildet sein. Dafür kann das Schaltgetriebe zum Bereitstellen eines Leerlaufs ausgebildet sein. Das Schaltgetriebe kann im Drehmomentfluss zwischen dem Traktionsmotor und dem Schaltgetriebe angeordnet sein. Durch das Schaltgetriebe kann ein größerer Bereich an Fahrgeschwindigkeiten ermöglicht werden. Das Schaltgetriebe kann Schaltelemente, Stirnradstufen und alternativ oder zusätzlich Planetenradsätze aufweisen. Beispielsweise kann das Schaltgetriebe dazu ausgebildet sein, die Motorwelle mit der Eingangswelle des Längsverteilergetriebes wahlweise über eine erste Stirnradstufe und eine zweite Stirnradstufe zu verbinden, wobei die erste Stirnradstufe eine andere Übersetzung als die zweite Stirnradstufe aufweisen kann. Ein dafür vorgesehenes Schaltelement des Schaltgetriebes kann beispielsweise als Doppelsynchronisierung ausgebildet sein. Bei einer modularen Bauweise kann auswählbar sein, ob ein solches Schaltgetriebe vorgesehen wird oder nicht. Sofern kein Schaltgetriebe vorgesehen ist, kann die Motorwelle beispielsweise permanent drehfest mit der Eingangswelle des Längsverteilergetriebes verbunden sein.

In einer Ausführungsform der Antriebsvorrichtung ist es vorgesehen, dass das Längsverteilergetriebe dazu ausgebildet ist, eine Längsdifferentialfunktion zwischen der ersten und zweiten Achsanordnung bereitzustellen. So kann beispielsweise eine Vorderachse mit einer anderen Drehzahl rotieren als eine Hinterachse. Das Längsverteilergetriebe kann eine Differenzdrehzahl zwischen den beiden Ausgangswellen erlauben. Zudem kann ein eingeleitetes Drehmoment variabel zwischen den beiden Ausgangswellen aufgeteilt werden. Alternativ kann das Längsverteilergetriebe frei von einer Längsdifferentialfunktion sein. Die beiden Ausgangswellen können dann immer ein gleiches Drehzahlverhältnis haben. Beispielsweise können beide Ausgangswellen dann immer mit der gleichen Drehzahl rotieren. Beispielsweise können die beiden Ausgangswellen in diesem Fall permanent drehfest miteinander verbunden sein. Bei einer modularen Bauweise kann auswählbar sein, ob das Längsverteilergetriebe eine Längsdifferentialfunktion oder keine Längsdifferentialfunktion hat.

In einer Ausführungsform der Antriebsvorrichtung ist es vorgesehen, dass das Längsverteilergetriebe eine Sperrvorrichtung aufweist, welche dazu ausgebildet ist, die Längsdifferentialfunktion zu sperren. Beispielsweise weist die Sperrvorrichtung ein Differentialschaltelement auf, wobei die erste Ausgangswelle und die zweite Ausgangswelle mit dem Differentialschaltelement drehfest miteinander verbindbar sind. Das Differentialschaltelement kann beispielsweise als Lamellenkupplung oder Klauenkupplung ausgebildet sein. Das Differentialschaltelement wird zu dessen Zuordnung so bezeichnet und kann anderen Schaltelementen entsprechen. Durch die Sperrvorrichtung kann die Längsdifferentialfunktion gesperrt werden, was eine Geländegängigkeit der Arbeitsmaschine erhöhen kann. Bei einer modularen Bauweise kann auswählbar sein, ob das Längsverteilergetriebe die Sperrvorrichtung aufweist oder nicht.

In einer Ausführungsform der Antriebsvorrichtung ist es vorgesehen, dass das Längsverteilergetriebe einen ersten Planetenradsatz mit einem ersten Drehelement, einem zweiten Drehelement und einem dritten Drehelement sowie einen zweiten Planetenradsatz mit einem ersten Drehelement, einem zweiten Drehelement und einem dritten Drehelement aufweist. Das erste Drehelement eines Planetenradsatzes kann beispielsweise als Sonnenrad ausgebildet sein. Der erste und der zweite Planetenradsatz können als Minus-Planetenradsatz oder als Plus-Planetenradsatz ausgestaltet sein. Ist ein Planetenradsatz als Minus-Planetenradsatz ausgestaltet, kann dessen zweites Drehelement durch einen Planetenträger gebildet werden und dessen drittes Drehelement durch ein Hohlrad. Ist ein Planetenradsatz als Plus-Planetenradsatz ausgestaltet, kann dessen zweites Drehelement durch ein Hohlrad gebildet werden und dessen drittes Drehelement durch einen Planetenträger. Bei einem Planetenradsatz können ein oder mehrere Planetenräder an dem Planetenträger drehbar gelagert sein und mit einer Außenverzahnung des Sonnenrads und einer Innenverzahnung des Hohlrads kämmen. Bei einem Minus-Planetenradsatz ist beispielsweise nur ein Satz von Planetenrädern vorgesehen, wobei die Planetenräder jeweils mit dem Sonnenrad und dem Hohlrad kämmen. Bei einem Plus-Planetenradsatz sind beispielsweise zwei Sätze von Planetenrädern vorgesehen, wobei die Planetenräder des ersten Satzes mit dem Sonnenrad und den Planetenrädern des zweiten Satzes kämmen. Die Planetenräder des zweiten Satzes kämmen entsprechend mit dem Hohlrad und den Planetenrädern des ersten Satzes. Durch die zwei Planetenradsätze kann in einer kompakten Bauweise mit wenigen Bauteilen eine große Übersetzung bereitgestellt werden als auch einfach die Differentialfunktion integriert werden. Das Längsverteilergetriebe kann beispielsweise frei von weiteren Planetenradsätzen und Stirnradstufen sein. Das Längsverteilergetriebe kann aber auch nur einen einzigen Planetenradsatz oder nur Stirnradstufen aufweisen.

Das erste Drehelement des ersten Planetenradsatzes kann eine Eingangswelle des Längsverteilergetriebes bilden. Das zweite Drehelement des ersten Planetenradsatzes kann die zweite Ausgangswelle bilden. Das dritte Drehelement des ersten Planetenradsatzes kann mit dem ersten Drehelement des zweiten Planetenradsatzes permanent drehfest verbunden sein. Das zweite Drehelement des zweiten Planetenradsatzes kann an einem stationären Bauteil festgesetzt sein. Das stationäre Bauteil kann beispielsweise ein Gehäuse oder ein Abschnitt eines Fahrzeugrahmens sein. Das zweite Drehelement des zweiten Planetenradsatzes kann beispielsweise permanent drehfest mit dem stationären Bauteil verbunden sein. Das dritte Drehelement des zweiten Planetenradsatzes kann die erste Ausgangswelle bilden. So kann ein kompaktes und effizientes Längsverteilergetriebe bereitgestellt werden. Die zweite Ausgangswelle kann sich beispielsweise axial hin zu dem Traktionsmotor erstrecken. Die erste Ausgangswelle kann sich axial von dem Traktionsmotor weg erstrecken. Der erste Planetenradsatz kann auf einer axial dem Traktionsmotor zugewandten Seite des Längsverteilergetriebes angeordnet sein.

In einer Ausführungsform der Antriebsvorrichtung ist es vorgesehen, dass das erste Drehelement des ersten Planetenradsatzes als erstes Sonnenrad ausgebildet ist. Das zweite Drehelement des ersten Planetenradsatzes kann als erster Planetenträger ausgebildet sein. Das dritte Drehelement des ersten Planetenradsatzes kann als erstes Hohlrad ausgebildet sein. Das erste Drehelement des zweiten Planetenradsatzes kann als zweites Sonnenrad ausgebildet sein. Das zweite Drehelement des zweiten Planetenradsatzes kann als zweiter Planetenträger ausgebildet sein. Das dritte Drehelement des zweiten Planetenradsatzes kann als zweites Hohlrad ausgebildet sein. Beide Planetenradsätze können als Minus-Planetenradsätze ausgebildet sein. Die Nummerierung der Drehelemente kann zu deren Zuordnung zu einem Planetenradsatz dienen. Die Bezeichnung als zweites Sonnenrad kann beispielsweise dazu dienen, dieses Sonnenrad eindeutig dem zweiten Planetenradsatz zuzuordnen. Entsprechend weist der zweite Planetenradsatz beispielsweise nur ein einziges Sonnenrad auf.

Das erste Sonnenrad kann somit eine Eingangswelle des Längsverteilergetriebes bilden. Der erste Planetenträger kann die zweite Ausgangswelle bilden. Das erste Hohlrad kann mit dem zweiten Sonnenrad permanent drehfest verbunden sein. Der zweite Planetenträger kann an dem stationären Bauteil festgesetzt sein. Das zweite Hohlrad kann die erste Ausgangswelle bilden. Das erste Sonnenrad kann mit der Motorwelle mechanisch wirkverbindbar oder wirkverbunden sein. Sofern eine Differentialfunktion vorgesehen ist, können das zweite Hohlrad und der erste Planetenträger beispielsweise drehfest mittels der Sperrvorrichtung verbindbar sein. Ohne Differentialfunktion können das zweite Hohlrad und der erste Planetenträger beispielsweise permanent drehfest miteinander verbunden sein.

Unter einer drehfesten Verbindung zweier Elemente wird eine Verbindung verstanden, bei welcher die beiden Elemente zu allen bestimmungsgemäßen Zuständen im Wesentlichen starr miteinander gekoppelt sind. Hierunter fällt auch eine reibschlüssige Verbindung, bei welcher es zu einem Schlupf kommen kann. Permanent drehfest verbundene Elemente können beispielsweise als dauerhaft drehfest miteinander verbundene einzelne Komponenten oder auch einstückig vorliegen.

Eine Verbindung zweier Elemente über ein weiteres Element kann bedeuten, dass dieses weitere Element an einer mittelbaren Wirkverbindung der beiden Elemente beteiligt sein kann. Beispielsweise kann dieses Element im Kraftfluss zwischen diesen beiden Elementen angeordnet sein. Eine Verbindung zweier Elemente über zwei oder mehr Elemente kann bedeuten, dass diese weiteren Elemente alle an einer mittelbaren Wirkverbindung der beiden Elemente beteiligt sind. Eine schaltbare Verbindung kann in einem Zustand eine Drehmomentübertragung zwischen zwei Elementen ermöglichen, beispielsweise durch eine starre Kopplung, und in einem anderen Zustand diese Drehmomentübertragung im Wesentlichen unterbrechen. Dafür kann zwischen den zwei Elementen ein entsprechendes Schaltelement vorgesehen sein. Wenn zwei Elemente drehfest verbindbar sind, können diese zwei Elemente beispielsweise über ein Schaltelement miteinander drehfest verbindbar sein. Wenn zwei Elemente mechanisch wirkverbindbar sind, können diese zwei Elemente beispielsweise über ein Schaltelement zur Drehmomentübertragung verbunden werden.

Ein Planetenradsatz ist beispielsweise als Minus-Planetenradsatz oder Plus-Planetenradsatz ausgebildet. Die Sonnenräder, Planetenträger und Hohlräder eines Planetenradsatzes bilden beispielsweise dessen Drehelemente. Jeder Planetenradsatz kann ein oder mehrere Planetenräder aufweisen, welche drehbar an dem Planetenträger befestigt sind. Beispielsweise kämmen die Planetenräder eines Planetenradsatzes jeweils mit einem Sonnenrad und einem Hohlrad eines Planetenradsatzes. Jeder Planetenradsatz kann frei von weiteren als den hier genannten Elementen sein. Jeder Planetenradsatz kann frei von weiteren als den hier genannten Drehelementen sein. Eine Drehachse eines Planetenradsatzes kann einer Drehachse der Drehelemente entsprechen.

In einer Ausführungsform der Antriebsvorrichtung ist es vorgesehen, dass die beiden Planetenradsätze radial gestapelt sind. Der zweite Planetenradsatz kann sich beispielsweise wenigstens teilweise oder komplett in dem gleichen Axialbereich wie der erste Planetenradsatz erstrecken. Das Längsverteilergetriebe kann so axial sehr kurzbauend sein. Der zweite Planetenradsatz kann in der Radialrichtung außerhalb des ersten Planetenradsatzes angeordnet sein. Beispielsweise können alle Drehelemente des zweiten Planetenradsatzes radial außen zu dem ersten Planetenradsatz angeordnet sein. Es ergibt sich eine axial sehr kompakte Bauweise, wodurch das Differentialgetriebe und die erste Elektromaschine gut in Fahrzeuglängsrichtung nebeneinander in der Arbeitsmaschine koaxial zueinander angeordnet werden können. Das Längsverteilergetriebe kann trotzdem einen Durchmesser aufweisen, welcher kleiner oder gleich zu dem Durchmesser des Traktionsmotors ist. Das erste Hohlrad und das zweite Sonnenrad können beispielsweise einstückig ausgebildet sein. Eine Innenverzahnung kann dabei einen ersten Hohlradbereich bilden und eine Außenverzahnung einen zweite Sonnenradbereich. Das erste Hohlrad und das zweite Sonnenrad können durch ein Sonnenhohlrad gebildet sein und beispielsweise einstückig ausgebildet sein.

Alternativ können die beiden Planetenradsätze auch axial nebeneinander angeordnet sein und wenigstens teilweise einen gleichen Radialbereich einnehmen. Ein Bauraumbedarf des Längsverteilergetriebes in radialer Richtung kann so sehr gering sein.

Ein zweiter Aspekt betrifft einen Antriebsstrang. Der Antriebsstrang weist eine Antriebsvorrichtung gemäß dem ersten Aspekt auf. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Der Antriebsstrang weist zudem eine erste Achsanordnung und eine zweite Achsanordnung auf, welche beispielsweise mit den zugeordneten Ausgangswellen des Längsverteilergetriebes verbunden oder verbindbar sein können. Der Antriebsstrang kann zusätzlich weitere Motoren aufweisen, wie beispielsweise weitere Elektromaschinen. Zudem kann der Antriebsstrang Pumpen aufweisen, welche mit diesen Motoren angetrieben werden. Dadurch können beispielsweise Verbraucher wie eine Lenkhydraulik, eine Arbeitshydraulik oder auch Schaltelemente mit einem hydraulischen Druck versorgbar sein. Die Pumpen können als Pumpen mit festem oder variablem Schluckvolumen ausgebildet sein. Der Antriebsstrang kann auch einen Zapfantrieb aufweisen. Der Antriebsstrang kann zum Bereitstellen einer Fahrleistung und optional einer Arbeitsleistung ausgebildet sein.

Ein dritter Aspekt betrifft eine Arbeitsmaschine mit einem Antriebsstrang gemäß dem zweiten Aspekt und alternativ oder zusätzlich einer Antriebsvorrichtung gemäß dem ersten Aspekt. Jeweilige Vorteile und weitere Merkmale sind der Beschreibung des ersten und des zweiten Aspekts zu entnehmen, wobei Ausgestaltungen des dritten Aspekts auch Ausgestaltungen des ersten bzw. zweiten Aspekts und umgekehrt bilden. Die Arbeitsmaschine kann ein Fahrgestell aufweisen, an welchem der Antriebsstrang oder die Antriebsvorrichtung befestigt ist. Die Arbeitsmaschine ist mit dem Antriebsstrang antreibbar, beispielsweise für ein Fahren. Eine Antriebskraft der Arbeitsmaschine kann mittels des Antriebsstrangs elektrisch bereitstellbar sein.

### Kurze Beschreibung der Figuren

Fig. 1 veranschaulicht schematisch eine erste Ausführungsform eines Antriebsstrangs einer Arbeitsmaschine.
Fig. 2 veranschaulicht schematisch eine zweite Ausführungsform eines Antriebsstrangs einer Arbeitsmaschine.
Fig. 3 veranschaulicht schematisch eine dritte Ausführungsform eines Antriebsstrangs einer Arbeitsmaschine.
Fig. 4 veranschaulicht schematisch eine vierte Ausführungsform eines Antriebsstrangs einer Arbeitsmaschine.
Fig. 5 veranschaulicht schematisch eine fünfte Ausführungsform eines Antriebsstrangs einer Arbeitsmaschine.
Fig. 6 veranschaulicht schematisch eine sechste Ausführungsform eines Antriebsstrangs einer Arbeitsmaschine.
Fig. 7 veranschaulicht schematisch eine siebente Ausführungsform eines Antriebsstrangs einer Arbeitsmaschine.
Fig. 8 veranschaulicht schematisch eine achte Ausführungsform eines Antriebsstrangs einer Arbeitsmaschine.
Fig. 9 veranschaulicht schematisch eine neunte Ausführungsform eines Antriebsstrangs einer Arbeitsmaschine.
Fig. 10 veranschaulicht schematisch eine zehnte Ausführungsform eines Antriebsstrangs einer Arbeitsmaschine.
Fig. 11 veranschaulicht schematisch eine elfte Ausführungsform eines Antriebsstrangs einer Arbeitsmaschine.
Fig. 12 veranschaulicht schematisch eine zwölfte Ausführungsform eines Antriebsstrangs einer Arbeitsmaschine.
Fig. 13 veranschaulicht schematisch eine dreizehnte Ausführungsform eines Antriebsstrangs einer Arbeitsmaschine.
Fig. 14 veranschaulicht schematisch eine vierzehnte Ausführungsform eines Antriebsstrangs einer Arbeitsmaschine.
Fig. 15 veranschaulicht in einer Draufsicht eine Arbeitsmaschine mit einem solchen Antriebsstrang.

### Detaillierte Beschreibung von Ausführungsformen

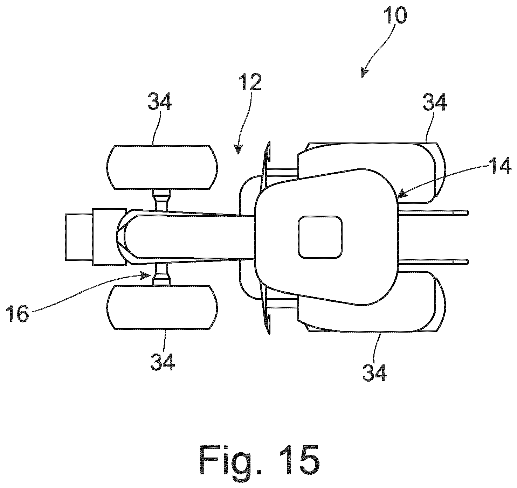

Fig. 15 veranschaulicht in einer schematischen Draufsicht eine als Traktor ausgebildete Arbeitsmaschine 10. Die Arbeitsmaschine 10 weist einen Antriebsstrang 12 auf, von welchem Ausführungsformen in den übrigen Figuren schematisch dargestellt sind. Der Antriebsstrang 12 weist eine als Hinterachse ausgebildete erste Achsanordnung 14 und eine als Vorderachse ausgebildete zweite Achsanordnung 16 auf. Zudem weist der Antriebsstrang 12 eine Antriebsvorrichtung auf. Die Antriebsvorrichtung weist einen in Fahrzeuglängsrichtung zwischen den beiden Achsanordnungen 14, 16 angeordneten Traktionsmotor 18 auf, welcher über ein Längsverteilergetriebe 20 der Antriebsvorrichtung mit den beiden Achsanordnungen 14, 16 zum Übertragen einer Antriebsleistung wirkverbindbar ist. Details der Antriebsvorrichtung und auch des Antriebsstrangs 12 werden im Folgenden anhand der Ausführungsbeispiele erläutert, welche in den übrigen Figuren gezeigt sind.

Der Traktionsmotor 18 ist als Elektromaschine ausgebildet und weist eine Motorwelle 22 auf. Das Längsverteilergetriebe 20 weist eine Eingangswelle 24 auf, welche mit der Motorwelle 22 mechanisch wirkverbunden oder wirkverbindbar ist. Das Längsverteilergetriebe 20 weist eine erste Ausgangswelle 26 auf, welche mit der ersten Achsanordnung 14 mechanisch wirkverbindbar ist. Das Längsverteilergetriebe 20 weist eine zweite Ausgangswelle 28 auf, welche mit der zweiten Achsanordnung 16 mechanisch wirkverbindbar ist. Die Antriebsvorrichtung ist somit dazu ausgebildet, eine Antriebsleistung von dem Traktionsmotor 18 über das Längsverteilergetriebe 20 an die beiden Ausgangswellen 26, 28 zu übertragen.

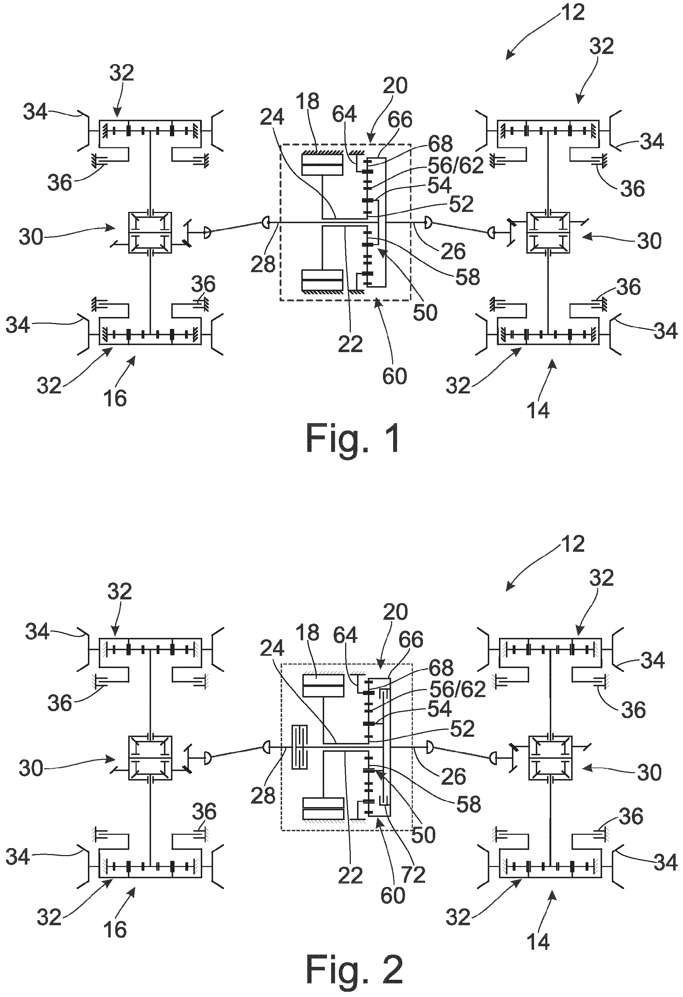

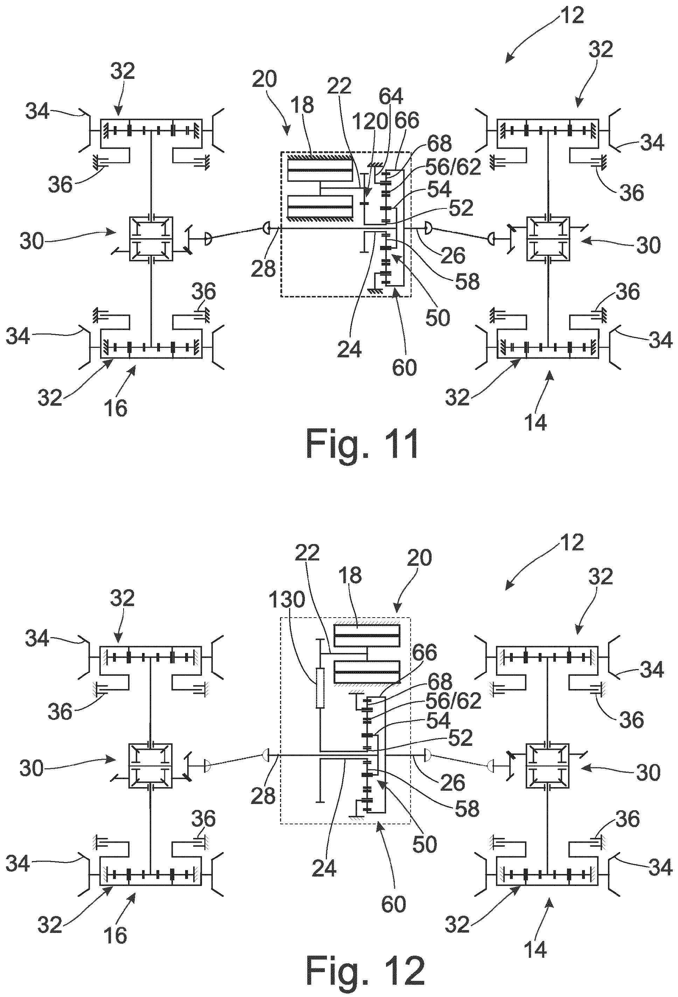

Die beiden Ausgangswellen 26, 28 sind koaxial zueinander und achsparallel zu dem Traktionsmotor 18 angeordnet. Bei den Ausführungsformen von Figs. 1 bis 10 und Fig. 13 ist der Traktionsmotor 18 koaxial mit dem Längsverteilergetriebe 20 angeordnet und die Motorwelle 22 ist koaxial zu den beiden Ausgangswellen 26, 28. Die Motorwelle 22 ist in diesen Ausführungsformen als Hohlwelle ausgebildet, wobei sich die zweite Ausgangswelle 28 durch die Motorwelle 22 hindurch erstreckt. Bei den Ausführungsformen von Figs. 11, 12 und 14 ist der Traktionsmotor 18 achsparallel versetzt zu dem Längsverteilergetriebe 20 angeordnet. Auch die Motorwelle 22 ist dann achsparallel versetzt zu den beiden Ausgangswellen 26, 28 angeordnet.

Jede der beiden Achsanordnungen 14, 16 weist ein Querdifferential 30 auf, welches mit der zugeordneten der beiden Ausgangswellen 26, 28 mechanisch wirkverbunden oder wirkverbindbar ist. Eine Verbindung wird dabei in den gezeigten Beispielen durch eine Kardanwelle bereitgestellt. In anderen Ausführungsformen ist das Querdifferential 30 von einer oder beiden Achsanordnungen 14, 16 mit der zugeordneten der beiden Ausgangswellen 26, 28 gelenkig für ein Lenken der Arbeitsmaschine 10 mit einer Knicklenkung verbunden. Die beiden Ausgangswellen 26, 28 des Querdifferentials 30 sind in jeder der beiden Achsanordnungen 14, 16 über einen Planetenradsatz 32 mit einem Fahrzeugrad 34 verbunden. Zudem ist an jeder Seite der beiden Achsanordnungen 14, 16 jeweils eine Betriebsbremse 36 vorgesehen, welche auf das zugeordnete Fahrzeugrad 34 zum Verzögern der Arbeitsmaschine 10 wirken.

Bei der ersten in Fig. 1 gezeigten Ausführungsform weist das Längsverteilergetriebe 20 einen ersten Planetenradsatz 50 mit einem ersten Sonnenrad 52, einem ersten Planetenträger 54 und einem ersten Hohlrad 56 sowie einen zweiten Planetenradsatz 60 mit einem zweiten Sonnenrad 62, einem zweiten Planetenträger 64 und einem zweiten Hohlrad 66 als Drehelemente auf. Die beiden Planetenradsätze 50, 60 sind jeweils als Minus-Planetenradsätze ausgebildet. In anderen Ausführungsformen werden auch Plus-Planetenradsätze genutzt. An dem ersten Planetenträger 54 sind erste Planetenräder 58 drehbar befestigt, welche mit dem ersten Sonnenrad 52 und dem ersten Hohlrad 56 kämmen. An dem zweiten Planetenträger 64 sind zweite Planetenräder 68 drehbar befestigt, welche mit dem zweiten Sonnenrad 62 und dem zweiten Hohlrad 66 kämmen. Das erste Hohlrad 56 ist permanent drehfest mit dem zweiten Sonnenrad 62 verbunden ist, wobei diese einstückig durch ein Sonnenhohlrad gebildet werden, welches eine Innenverzahnung und eine Außenverzahnung aufweist. Die beiden Planetenradsätze 50, 60 sind radial gestapelt, wobei der zweite Planetenradsatz 60 radial außen zu dem ersten Planetenradsatz 50 angeordnet ist. Der zweite Planetenträger 64 ist an einem stationären Bauteil festgesetzt. Der erste Planetenträger 54 bildet die zweite Ausgangswelle 28. Das zweite Hohlrad 66 bildet die erste Ausgangswelle 26. Das erste Sonnenrad 52 bildet die Eingangswelle 24. Das Längsverteilergetriebe 20 ist in der ersten Ausführungsform dazu ausgebildet, eine Längsdifferentialfunktion zwischen der ersten Achsanordnung 14 und zweiten Achsanordnung 16 bereitzustellen. Die beiden Ausgangswellen 26, 28 können unterschiedlich schnell drehen.

Die zweite in Fig. 2 gezeigte Ausführungsform ist eine Abwandlung der ersten Ausführungsform. Es werden nur Unterschiede zu dieser Ausführungsform erläutert. Bei der zweiten Ausführungsform weist das Längsverteilergetriebe 20 eine Sperrvorrichtung 70 auf, welche dazu ausgebildet ist, die Längsdifferentialfunktion zu sperren. Zu diesem Zweck weist die Sperrvorrichtung 70 ein Differentialschaltelement 72 auf, welches dazu ausgebildet ist, die erste Ausgangswelle 26 und die zweite Ausgangswelle 28 schaltbar drehfest miteinander zu verbinden. Entsprechend sind auch das zweite Hohlrad 66 und der erste Planetenträger 54 drehfest miteinander durch das Differentialschaltelement 72 verbindbar.

Bei der zweiten Ausführungsform ist die erste Achsanordnung 14 permanent mit dem Längsverteilergetriebe 20 und damit dem Traktionsmotor 18 verbunden. Zwischen der zweiten Ausgangswelle 28 und der zweiten Achsanordnung 16 ist dagegen ein weiteres Schaltelement 80 zum mechanischen Wirkverbinden der zweiten Ausgangswelle 28 und der zweiten Achsanordnung 16 vorgesehen. Damit kann die zweite Achsanordnung 16 von dem Traktionsmotor 18 entkoppelt werden. Die zweite Ausführungsform weist somit einen deaktivierbaren Allradantrieb auf.

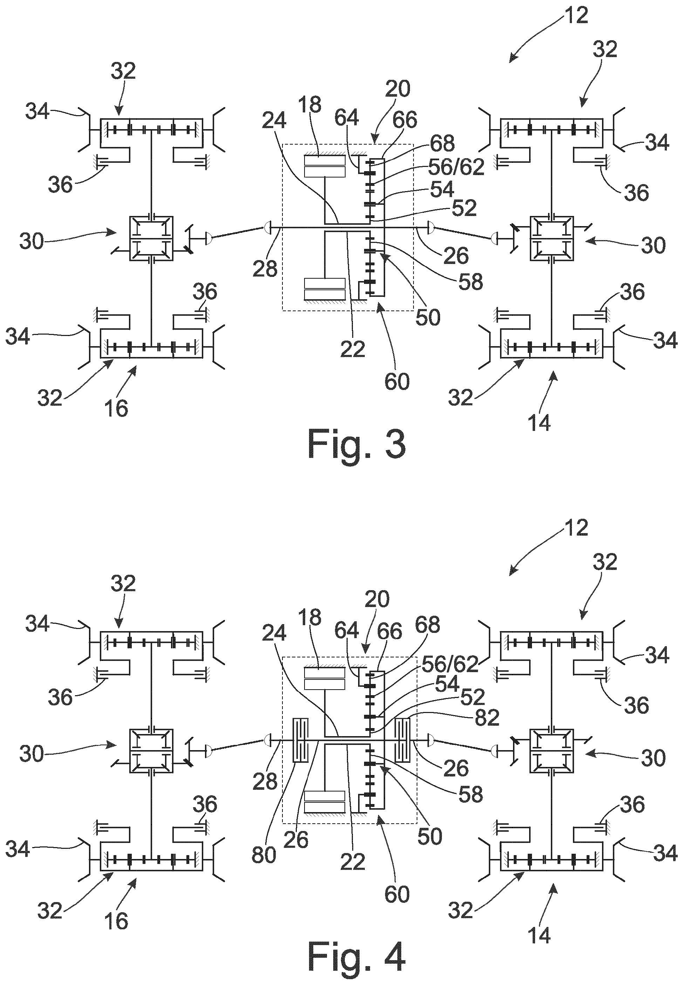

Die dritte in Fig. 3 gezeigte Ausführungsform ist eine Abwandlung der ersten Ausführungsform. Es werden nur Unterschiede zu dieser Ausführungsform erläutert. Bei der dritten Ausführungsform ist das Längsverteilergetriebe 20 anders gestaltet. Die beiden Ausgangswellen 26, 28 und damit auch das zweite Hohlrad 66 und der erste Planetenträger 54 sind permanent drehfest miteinander verbunden. Entsprechend stellt das Längsverteilergetriebe 20 von der dritten Ausführungsform keine Längsdifferentialfunktion zwischen der ersten Achsanordnung 14 und der zweiten Achsanordnung 16 bereit.

Die vierte in Fig. 4 gezeigte Ausführungsform ist eine Abwandlung der dritten Ausführungsform. Es werden nur Unterschiede zu dieser Ausführungsform erläutert. Bei der vierten Ausführungsform ist die permanente drehfeste Verbindung der beiden Ausgangswellen 26, 28 und damit auch des zweiten Hohlrads 66 und des ersten Planetenträgers 54 geometrisch anders gestaltet.

Daneben weist die vierte Ausführungsform zwischen der zweiten Ausgangswelle 28 und der zweiten Achsanordnung 16 das weitere Schaltelement 80 zum mechanischen Wirkverbinden der zweiten Ausgangswelle 28 und der zweiten Achsanordnung 16 auf, wie die zweite Ausführungsform. Zudem ist die erste Achsanordnung 14 nicht permanent mit dem Längsverteilergetriebe 20 und damit dem Traktionsmotor 18 verbunden. Stattdessen ist hier noch ein weiteres Schaltelement 82 zwischen der ersten Ausgangswelle 26 und der ersten Achsanordnung 14 vorgesehen. Mit diesem Schaltelement 82 ist die erste Ausgangswelle 26 mechanisch mit der ersten Achsanordnung 14 wirkverbindbar. Bei der vierten Ausführungsform können also wahlweise entweder die Hinterachse, die Vorderachse oder beide Achsen von dem Traktionsmotor 18 entkoppelt und wieder gekoppelt werden.

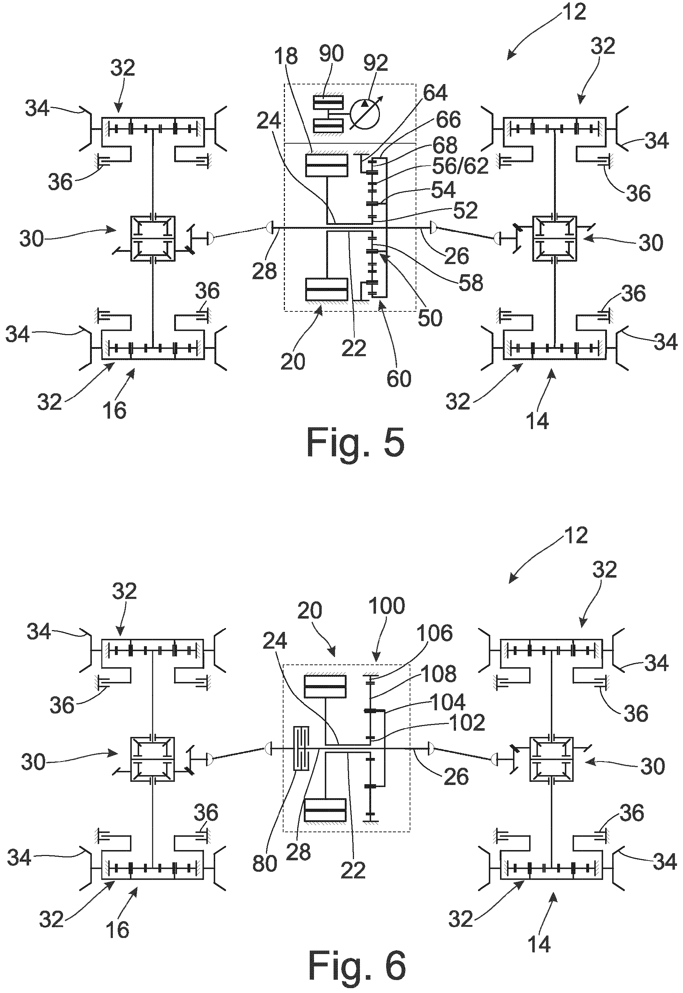

Die fünfte in Fig. 5 gezeigte Ausführungsform ist eine Abwandlung der dritten Ausführungsform. Es werden nur Unterschiede zu dieser Ausführungsform erläutert. Bei der fünften Ausführungsform weist der Antriebsstrang 12 eine zusätzliche Elektromaschine 90 auf, welche eine Verstellpumpe 92 des Antriebsstrangs 12 antreibt. Damit wird in dem gezeigten Beispiel eine Arbeitshydraulik mit Druck versorgt. Die zusätzliche Elektromaschine 90 ist nicht mit der übrigen Antriebsvorrichtung zur Drehmomentübertragung verbunden und kann die Verstellpumpe 92 unabhängig von einem Fahrantrieb antreiben. Auch bei den übrigen Ausführungsformen ist in weiteren Abwandlungen die zusätzliche Elektromaschine 90 und die Verstellpumpe 92 vorgesehen.

Die sechste in Fig. 6 gezeigte Ausführungsform ist eine Abwandlung der dritten Ausführungsform. Es werden nur Unterschiede zu dieser Ausführungsform erläutert. Bei der sechsten Ausführungsform weist das Längsverteilergetriebe 20 nur einen einzigen Planetenradsatz 100 auf, welches in dem gezeigten Beispiel als Minus-Planetenradsatz ausgebildet ist. In einer Abwandlung ist der Planetenradsatz 100 als Plus-Planetenradsatz ausgebildet. Der Planetenradsatz 100 weist ein erstes Drehelement 102, ein zweites Drehelement 104 und ein drittes Drehelement 106 auf. An dem Drehelement, welches als Planetenträger ausgebildet ist, sind jeweilige Planetenräder 108 drehbar gelagert. Das erste Drehelement 102 bildet die Eingangswelle 24 des Längsverteilergetriebes 20. Das zweite Drehelement 104 bildet einen Abtrieb des Planetenradsatzes 100 und ist sowohl mit der ersten Ausgangswelle 26 als auch der zweiten Ausgangswelle 28 permanent drehfest verbunden. Das Längsverteilergetriebe 20 stellt bei dieser Ausführungsform also keine Längsdifferentialfunktion bereit. Das dritte Drehelement 106 ist an dem stationären Bauteil festgesetzt. Bei der Bauweise mit Minus-Planetenradsatz wird das erste Drehelement 102 durch ein Sonnenrad, das zweite Drehelement 104 durch einen Planetenträger und das dritte Drehelement 106 durch ein Hohlrad gebildet. Bei der Bauweise mit Plus-Planetenradsatz wird das erste Drehelement 102 durch ein Sonnenrad, das zweite Drehelement 104 durch ein Hohlrad und das dritte Drehelement 106 durch einen Planetenträger gebildet. Zudem weist die sechste Ausführungsform das Schaltelement 80 zum mechanischen Wirkverbinden der zweiten Ausgangswelle 28 und der zweiten Achsanordnung 16 auf, wie die zweite Ausführungsform.

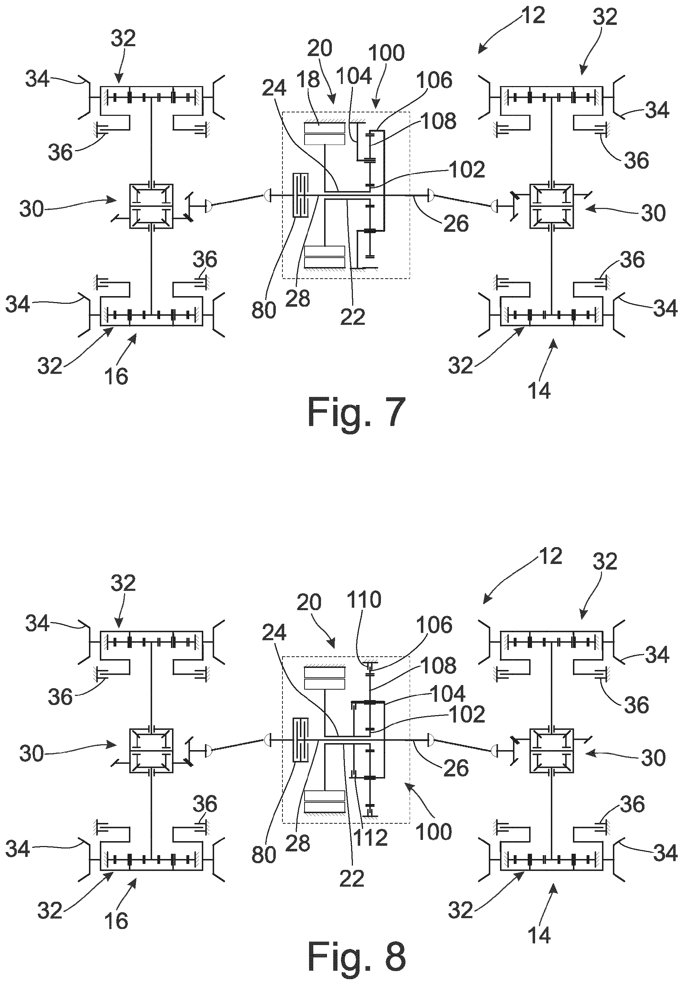

Die siebente in Fig. 7 gezeigte Ausführungsform ist eine Abwandlung der sechsten Ausführungsform. Es werden nur Unterschiede zu dieser Ausführungsform erläutert. Gezeigt ist eine Bauweise mit Minus-Planetenradsatz. In einer Abwandlung wird ein Plus-Planetenradsatz genutzt. Bei der siebenten Ausführungsform sind die Drehelemente 102, 104, 106 des Planetenradsatzes anders angebunden. Das erste Drehelement 102 ist weiterhin permanent drehfest mit der Motorwelle 22 verbunden und bildet somit die Eingangswelle 24 des Längsverteilergetriebes 20. Das zweite Drehelement 104 ist an dem stationären Bauteil festgesetzt. Das dritte Drehelement 106 bildet einen Abtrieb des Planetenradsatzes 100 und ist sowohl mit der ersten Ausgangswelle 26 als auch der zweiten Ausgangswelle 28 permanent drehfest verbunden.

Die achte in Fig. 8 gezeigte Ausführungsform ist eine Abwandlung der sechsten Ausführungsform. Es werden nur Unterschiede zu dieser Ausführungsform erläutert. Das Längsverteilergetriebe 20 ist hier als Zweiganggetriebe ausgebildet und weist ebenfalls nur einen einzigen Planetenradsatz 100 auf. Der Planetenradsatz 100 kann erneut als Minus-Planetenradsatz oder Plus-Planetenradsatz ausgebildet sein, wobei nur die Bauweise mit Minus-Planetenradsatz gezeigt ist. Das erste Drehelement 102 ist weiterhin permanent drehfest mit der Motorwelle 22 verbunden und bildet somit die Eingangswelle 24 des Längsverteilergetriebes 20. Das zweite Drehelement 104 bildet einen Abtrieb des Planetenradsatzes 100 und ist sowohl mit der ersten Ausgangswelle 26 als auch der zweiten Ausgangswelle 28 permanent drehfest verbunden. Das dritte Drehelement 106 ist an dem stationären Bauteil mittels eines zusätzlichen Schaltelements 110 des Längsverteilergetriebes 20 festsetzbar. Zudem ist der Planetenradsatz 100 mittels noch eines weiteren Schaltelements 112 des Längsverteilergetriebes 20 blockierbar, sodass alle drei Drehelemente 102, 104 und 106 gleich drehen. In dem gezeigten Beispiel sind dafür das erste Drehelement 102 und das zweite Drehelement 104 mittels des Schaltelements 112 drehfest verbindbar. In Abwandlungen sind beliebige andere Paare der drei Drehelemente 102, 104 und 106 mittels des Schaltelements 112 zum Verblocken drehfest verbindbar.

In einem Gang ist der Planetenradsatz 100 unverblockt und somit das Schaltelement 112 geöffnet. Das Schaltelement 110 setzt dagegen das dritte Drehelement 106 an dem stationären Bauteil fest und ist somit geschlossen. In dem so eingelegten Gang entspricht die Übersetzung und Funktionsweise des Längsverteilergetriebes 20 dem der sechsten Ausführungsform. In einem anderen Gang ist der Planetenradsatz 100 verblockt und somit das Schaltelement 112 geschlossen. Damit nicht der ganze Antriebsstrang 12 blockiert wird, ist das Schaltelement 112 geöffnet und somit das dritte Drehelement 106 freigegeben. Die Schaltelemente 110, 112 sind in einer Abwandlung als Synchronisierungen ausgebildet und in einer anderen Abwandlung als Klauenkupplungen.

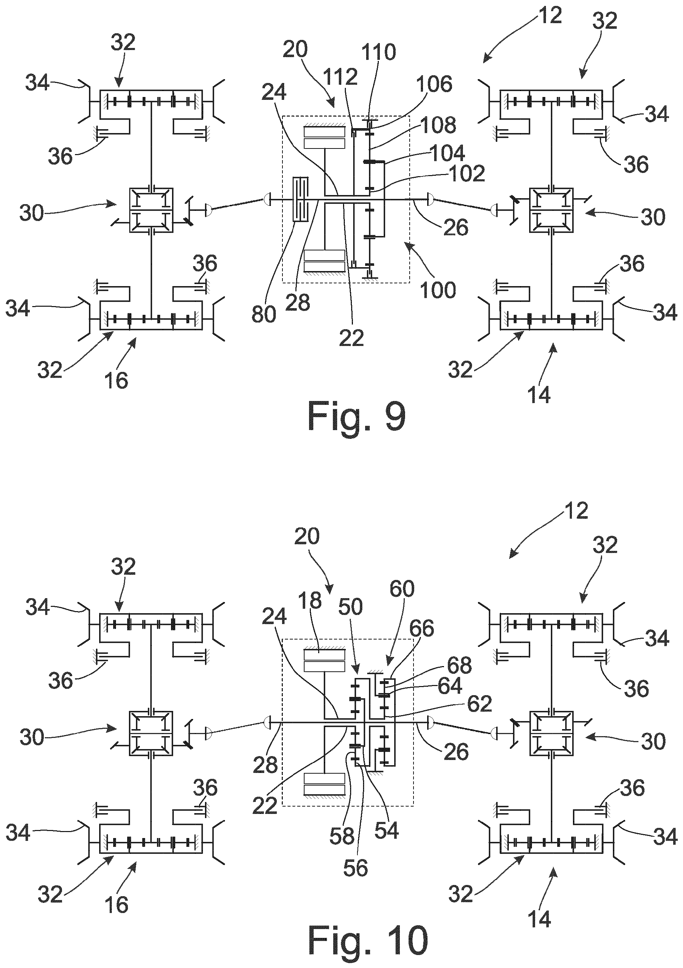

Die neunte in Fig. 9 gezeigte Ausführungsform ist eine Abwandlung der achten Ausführungsform. Es werden nur Unterschiede zu dieser Ausführungsform erläutert. Bei dieser Ausführungsform ist eine Abwandlung gezeigt, bei welchem der Planetenradsatz 100 anders verblockt wird. Das Schaltelement 112 ist nun dazu ausgebildet, den Planetenradsatz 100 zu verblocken, indem das dritte Drehelement 106 drehfest mit dem ersten Drehelement 102 verbunden wird.

Die zehnte in Fig. 10 gezeigte Ausführungsform ist eine Abwandlung der dritten Ausführungsform. Es werden nur Unterschiede zu dieser Ausführungsform erläutert. Bei dieser Ausführungsform sind die beiden Planetenradsätze 50, 60 nicht radial gestapelt, sondern axial nebeneinander angeordnet. Das erste Hohlrad 56 bildet somit nicht an seinem Außenumfang durch eine Verzahnung das zweite Sonnenrad 62. Stattdessen ist das zweite Sonnenrad 62 axial neben dem ersten Hohlrad 56 in Richtung der ersten Achsanordnung 14 angeordnet. Der erste Planetenradsatz 50 ist axial zwischen dem Traktionsmotor 18 und dem zweiten Planetenradsatz 60 angeordnet. Die beiden Ausgangswellen 26, 28 und damit auch der erste Planetenträger 54 und das zweite Hohlrad 66 sind permanent drehfest miteinander verbunden. Somit stellt die zehnte Ausführungsform keine Längsdifferentialfunktion bereit. In einer Abwandlung sind beiden Ausgangswellen 26, 28 und damit auch der erste Planetenträger 54 und das zweite Hohlrad 66 nicht drehfest miteinander verbunden. Dann wird eine Längsdifferentialfunktion bereitgestellt. Dies entspricht einer Abwandlung der ersten Ausführungsform mit axial nebeneinander angeordneten Planetenradsätzen 50, 60 statt radial gestapelten Planetenradsätzen 50, 60.

Die elfte in Fig. 11 gezeigte Ausführungsform ist eine Abwandlung der ersten Ausführungsform. Es werden nur Unterschiede zu dieser Ausführungsform erläutert. Der Traktionsmotor 18 ist nun achsparallel versetzt zu dem Längsverteilergetriebe 20 angeordnet. Die Motorwelle 22 ist somit achsparallel versetzt zu den beiden Ausgangswellen 26 und nicht koaxial dazu angeordnet. Die zweite Ausgangswelle 28 erstreckt sich nicht durch die Motorwelle 22 hindurch, welche in der gezeigten Ausführungsform massiv ausgebildet ist. Die Motorwelle 22 ist mittels einer Stirnradstufe 120 mit der Eingangswelle 24 des Längsverteilergetriebes 20 mechanisch wirkverbunden. Dadurch wird eine höhere Übersetzung bereitgestellt.

Die zwölfte in Fig. 12 gezeigte Ausführungsform ist eine Abwandlung der elften Ausführungsform. Es werden nur Unterschiede zu dieser Ausführungsform erläutert. Die Motorwelle 22 ist statt mittels der Stirnradstufe 120 mittels eines Zugmittels 130 mit der Eingangswelle 24 des Längsverteilergetriebes 20 mechanisch wirkverbunden. Dadurch kann der Traktionsmotor 18 einfach weiter radial beabstandet von dem Längsverteilergetriebe 20 platziert werden, wodurch eine andere Bauraumausnutzung ermöglicht wird.

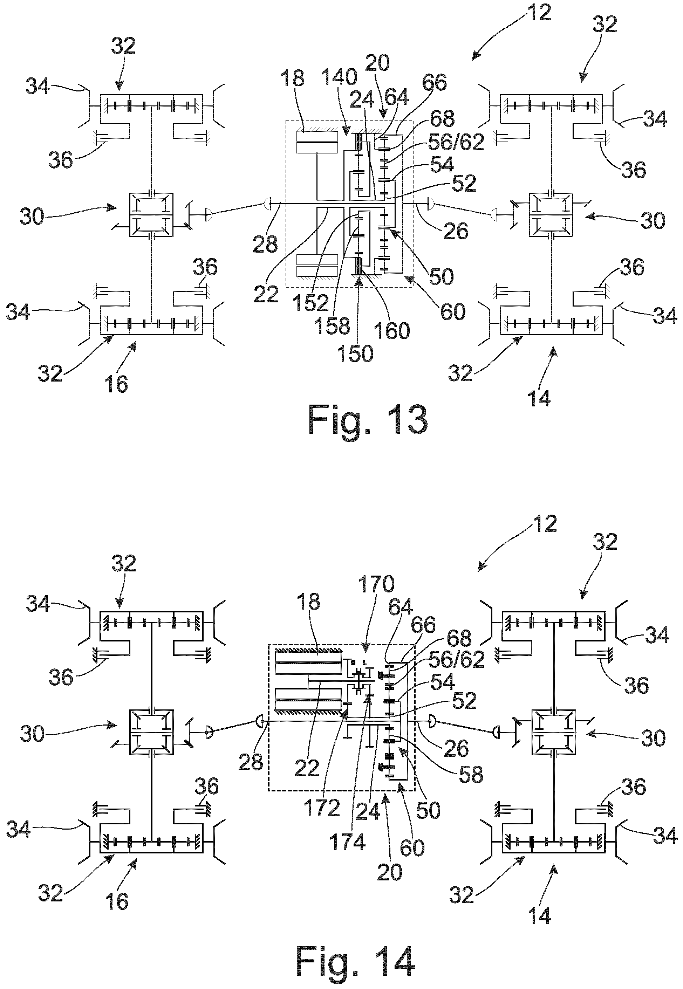

Die dreizehnte in Fig. 13 gezeigte Ausführungsform ist eine Abwandlung der ersten Ausführungsform. Es werden nur Unterschiede zu dieser Ausführungsform erläutert. Bei der dreizehnten Ausführungsform ist die Motorwelle 22 nicht direkt mit der Eingangswelle 24 des Längsverteilergetriebes 20 verbunden. Stattdessen wird die Antriebsleistung über ein Schaltgetriebe 140 mit zwei schaltbaren Gängen an das Längsverteilergetriebe 20 übertragen. In dem gezeigten Ausführungsbeispiel ist das Schaltgetriebe 140 in planetenbauweise ausgebildet und weist einen Planetenradsatz 150 mit einem ersten Drehelement 152, einem zweiten Drehelement 154 und einem dritten Drehelement 156 auf. In anderen Abwandlungen werden andere Schaltgetriebe genutzt. An dem als Planetenträger ausgebildeten Drehelement sind Planetenräder 158 drehbar gelagert. Gezeigt ist eine Bauweise mit Minus-Planetenradsatz, wobei in einer Abwandlung ein Plus-Planetenradsatz genutzt wird. Zudem weist das Schaltgetriebe 140 ein Doppelschaltelement 160 auf. Das Schaltgetriebe 140 ist koaxial mit dem Längsverteilergetriebe 20 angeordnet. Das Doppelschaltelement 160 setzt je nach Schaltzustand das erste Drehelement 152 an dem stationären Bauteil fest oder verblockt das Schaltgetriebe 140, hier durch drehfestes Verbinden des ersten Drehelements 152 und des dritten Drehelements 156. Das dritte Drehelement 156 bildet eine Eingangswelle 24 des Schaltgetriebes 140. Das zweite Drehelement 154 bildet eine Ausgangswelle des Schaltgetriebes 140 und ist permanent drehfest mit der Eingangswelle 24 des Längsverteilergetriebes 20 verbunden.

Die vierzehnte in Fig. 14 gezeigte Ausführungsform ist eine Abwandlung der elften Ausführungsform. Es werden nur Unterschiede zu dieser Ausführungsform erläutert. Die Motorwelle 22 des Traktionsmotors 18 ist bei dieser Ausführungsform nicht über eine einzige Stirnradstufe 120 mit der Eingangswelle 24 mechanisch wirkverbunden. Stattdessen ist ein Schaltgetriebe 170 vorgesehen, welches anders als das Schaltgetriebe 140 bei der dreizehnten Ausführungsform ausgebildet ist. Das Schaltgetriebe 170 weist eine erste Stirnradstufe 172 und eine zweite Stirnradstufe 174 auf, welche unterschiedliche Übersetzungen haben. Zudem weist das Schaltgetriebe 170 ein Doppelschaltelement 176 auf, welches in der gezeigten Ausführungsform mit nur einem Aktuator betätigbar ist und als Doppelsynchronisierung ausgebildet ist. Je nach Schaltstellung des Doppelschaltelements 176 ist die Motorwelle 22 somit über die erste Stirnradstufe 172 oder die zweite Stirnradstufe 174 mit der Eingangswelle 24 des Längsverteilergetriebes 20 mechanisch wirkverbunden. So werden zwei Gänge bereitgestellt. In einer Abwandlung weist das Doppelschaltelement 176 eine Schaltstellung auf, in welcher die Motorwelle 22 weder mit der ersten Stirnradstufe 172 noch der zweiten Stirnradstufe 174 verbunden ist. Damit kann ein Leerlauf bereitgestellt werden.

### Bezugszeichen

- 10: Arbeitsmaschine
- 12: Antriebsstrang
- 14: erste Achsanordnung
- 16: zweite Achsanordnung
- 18: Traktionsmotor
- 20: Längsverteilergetriebe
- 22: Motorwelle
- 24: Eingangswelle
- 26: erste Ausgangswelle
- 28: zweite Ausgangswelle
- 30: Querdifferential
- 32, 100, 150: Planetenradsatz
- 34: Fahrzeugrad
- 36: Betriebsbremse
- 50: erster Planetenradsatz
- 52: erstes Sonnenrad
- 54: erster Planetenträger
- 56: erstes Hohlrad
- 58: erste Planetenräder
- 60: zweiter Planetenradsatz
- 62: zweites Sonnenrad
- 64: zweiter Planetenträger
- 66: zweites Hohlrad
- 68: zweite Planetenräder
- 70: Sperrvorrichtung
- 72: Differentialschaltelement
- 80, 82, 110, 112: Schaltelement
- 90: zusätzliche Elektromaschine
- 92: Verstellpumpe
- 102, 152: erstes Drehelement
- 104, 154: zweites Drehelement
- 106, 156: drittes Drehelement

- 108, 158: Planetenräder
- 120: Stirnradstufe
- 130: Zugmittel
- 140: Schaltgetriebe
- 160, 176: Doppelschaltelement
- 170: Schaltgetriebe
- 172: erste Stirnradstufe
- 174: zweite Stirnradstufe

## Patentansprüche

1. Antriebsvorrichtung für eine Arbeitsmaschine (10) mit einem als Elektromaschine ausgebildeten Traktionsmotor (18) und einem Längsverteilergetriebe (20) mit einer ersten Ausgangswelle (26) zum Antreiben einer ersten Achsanordnung (14) der Arbeitsmaschine (10) und einer zweiten Ausgangswelle (28) zum Antreiben einer zweiten Achsanordnung (16) der Arbeitsmaschine (10), wobei die Antriebsvorrichtung dazu ausgebildet ist, eine Antriebsleistung von dem Traktionsmotor (18) über das Längsverteilergetriebe (20) an die beiden Ausgangswellen (26, 28) zu übertragen, und wobei die beiden Ausgangswellen (26, 28) koaxial zueinander und koaxial oder achsparallel zu dem Traktionsmotor (18) angeordnet sind.

2. Antriebsvorrichtung nach Anspruch 1, **dadurch gekennzeichnet, dass** der Traktionsmotor (18) koaxial mit dem Längsverteilergetriebe (20) angeordnet ist.

3. Antriebsvorrichtung nach Anspruch 1 oder 2, **dadurch gekennzeichnet, dass** der Traktionsmotor (18) eine als Hohlwelle ausgebildete Motorwelle (22) aufweist, wobei sich die zweite Ausgangswelle (28) durch die Motorwelle (22) hindurch erstreckt.

4. Antriebsvorrichtung nach einem der vorhergehenden Ansprüche, **dadurch gekennzeichnet, dass** die Antriebsvorrichtung ein Schaltelement (80; 82) zum mechanischen Wirkverbinden der ersten (26) und/oder zweiten Ausgangswelle (28) mit der zugeordneten Achsanordnung (14, 16) aufweist.

5. Antriebsvorrichtung nach einem der vorhergehenden Ansprüche, **dadurch gekennzeichnet, dass** wenigstens eine der beiden Achsanordnungen (14, 16) für ein Lenken der Arbeitsmaschine (10) gelenkig mit der zugeordneten Ausgangswelle (26, 28) verbindbar ist.

6. Antriebsvorrichtung nach einem der vorhergehenden Ansprüche, **dadurch gekennzeichnet, dass** der Antriebsstrang (12) ein Schaltgetriebe (140, 170) aufweist, welches für eine Übertragung der Antriebsleistung von dem Traktionsmotor (18) an das Längsverteilergetriebe (20) schaltbar mit einer ersten Übersetzung und wenigstens einer zweiten Übersetzung ausgebildet ist.

7. Antriebsvorrichtung nach einem der vorhergehenden Ansprüche, **dadurch gekennzeichnet, dass** das Längsverteilergetriebe (20) dazu ausgebildet ist, eine Längsdifferentialfunktion zwischen der ersten und zweiten Achsanordnung (14, 16) bereitzustellen.

8. Antriebsvorrichtung nach Anspruch 7, **dadurch gekennzeichnet, dass** das Längsverteilergetriebe (20) eine Sperrvorrichtung (70) aufweist, welche dazu ausgebildet ist, die Längsdifferentialfunktion zu sperren.

9. Antriebsvorrichtung nach einem der vorhergehenden Ansprüche, **dadurch gekennzeichnet, dass** die erste und die zweite Ausgangswelle (26, 28) drehfest miteinander verbunden sind.

10. Antriebsvorrichtung nach einem der vorhergehenden Ansprüche, **dadurch gekennzeichnet, dass** das Längsverteilergetriebe (20) einen ersten Planetenradsatz (50) mit einem ersten Drehelement (102), einem zweiten Drehelement (104) und einem dritten Drehelement (106) umfasst, wobei das erste Drehelement (102) des ersten Planetenradsatzes (100) eine Eingangswelle (24) des Längsverteilergetriebe (20) bildet und wobei das zweite Drehelement (104) des ersten Planetenradsatzes (100) die erste und die zweite Ausgangswelle (26, 28) bildet.

11. Antriebsvorrichtung nach einem der vorhergehenden Ansprüche, **dadurch gekennzeichnet, dass** das Längsverteilergetriebe (20) einen ersten Planetenradsatz (50) mit einem ersten Drehelement (52), einem zweiten Drehelement (54) und einem dritten Drehelement (56) sowie einen zweiten Planetenradsatz (60) mit einem ersten Drehelement (62), einem zweiten Drehelement (64) und einem dritten Drehelement (66) aufweist, wobei das erste Drehelement (52) des ersten Planetenradsatzes (50) eine Eingangswelle (24) des Längsverteilergetriebe bildet, wobei das zweite Drehelement (54) des ersten Planetenradsatzes (50) die zweite Ausgangswelle (28) bildet, wobei das dritte Drehelement (56) des ersten Planetenradsatzes (50) mit dem ersten Drehelement (62) des zweiten Planetenradsatzes (60) permanent drehfest verbunden ist, wobei das zweite Drehelement (64) des zweiten Planetenradsatzes (60) an einem stationären Bauteil festgesetzt ist, und wobei das dritte Drehelement (66) des zweiten Planetenradsatzes (60) die erste Ausgangswelle (26) bildet.

12. Antriebsvorrichtung nach Anspruch 11, **dadurch gekennzeichnet, dass** das erste Drehelement (52) des ersten Planetenradsatzes (50) als erstes Sonnenrad (52) ausgebildet ist, das zweite Drehelement (54) des ersten Planetenradsatzes (50) als erster Planetenträger (54) ausgebildet ist, das dritte Drehelement (56) des ersten Planetenradsatzes (50) als erstes Hohlrad (56) ausgebildet ist, das erste Drehelement (62) des zweiten Planetenradsatzes (60) als zweites Sonnenrad (62) ausgebildet ist, das zweite Drehelement (64) des zweiten Planetenradsatzes (60) als zweiter Planetenträger (64) ausgebildet ist, das dritte Drehelement (66) des zweiten Planetenradsatzes (60) als zweites Hohlrad (66) ausgebildet ist.

13. Antriebsvorrichtung nach Anspruch 11 oder 12, **dadurch gekennzeichnet, dass** die beiden Planetenradsätze (50, 60) radial gestapelt sind.

14. Antriebsstrang (12) mit einer Antriebsvorrichtung nach einem der vorhergehenden Ansprüche mit einer ersten Achsanordnung (14) und mit einer zweiten Achsanordnung (16).

15. Arbeitsmaschine (10) mit einem Antriebsstrang (12) nach Anspruch 14, wobei die Arbeitsmaschine (10) mit dem Antriebsstrang (12) antreibbar ist.
